# EUROPÄISCHE PATENTSCHRIFT

(11) **EP 1 252 457 B1**
(45) Veröffentlichungstag und Bekanntmachung des Hinweises auf die Patenterteilung: **03.08.2005**
(21) Anmeldenummer: 00988566.6
(22) Anmeldetag: 09.11.2000
(51) Int. Cl.: F16K 1/00

(54) **ELEKTROMAGNETISCH BETÄTIGBARES PROPORTIONALVENTIL**
PROPORTIONAL VALVE THAT CAN BE ACTUATED ELECTROMAGNETICALLY
SOUPAPE PROPORTIONNELLE A ACTIONNEMENT ELECTROMAGNETIQUE

(30) Priorität: 08.12.1999 DE 19959021
(43) Veröffentlichungstag der Anmeldung: 30.10.2002
(73) Patentinhaber: ROBERT BOSCH GMBH, 70442 Stuttgart (DE)
(72) Erfinder: MEIER, Dietmar, 75233 Tiefenbronn (DE)
(86) Internationale Anmeldenummer: PCT/DE2000/003917
(87) Internationale Veröffentlichungsnummer: WO 2001/042691

(56) Entgegenhaltungen:
- DE-A- 1 927 467
- DE-A- 3 829 992
- GB-A- 807 547
- US-A- 5 965 249

## Beschreibung

### Stand der Technik

Die Erfindung geht aus von einem elektromagnetisch betätigbaren Proportionalventil mit den Merkmalen aus dem Oberbegriff des Patentanspruchs 1. Derartige Proportionalventile werden beispielsweise als Druck- oder Durchflußregler in hydraulischen Steuerkreisen eingesetzt.

Ein elektromagnetisch betätigbares Proportionalventil mit den genannten Merkmalen ist beispielsweise aus der DE 38 29 992 Al bekannt. Dieses Proportionalventil ist aus einem Stellmagneten mit Spule und Anker, einem Ventilteil mit einem beweglich geführten und vom Anker beaufschlagten Stellglied und einer Steuerelektronik zur Regelung der Ansteuerung des Ankers durch die Spule aufgebaut. Die Steuerelektronik ist an das Gehäuse des Stellmagneten angeflanscht. Mechanische und/oder hydromechanische Schwingungen, erzeugt beispielsweise von Pumpen und deren Druckpulsationen oder von den Schaltvorgängen benachbart liegender Schalteinrichtungen, werden über das Gehäuse des Stellmagneten auf die verdrahteten Bauelemente, die Leitungen und die Steckverbinder der Steuerelektronik übertragen. Durch die auftretenden Beschleunigungen können die Belastungen dieser Bauelemente derart hoch werden, daß Beschädigungen auftreten, die im Extremfall zum Totalausfall der Steuerelektronik führen. Damit die elektronischen Bauelemente diesen Erschütterungen standhalten, werden aufwendige Vorkehrungen - Eingießen oder Verkleben der Bauelemente bei der Herstellung der Steuerelektronik - getroffen. Derartige Maßnahmen sind jedoch teuer und reichen oftmals nicht aus.

### Vorteile der Erfindung

Demgegenüber weist ein elektromagnetisch betätigbares Proportionalventil mit den kennzeichnenden Merkmalen des Patentanspruchs 1 den Vorteil auf, daß die Übertragungswege der Schwingungen auf die Steuerelektronik unterbrochen oder zumindest gedämpft sind. Die erläuterten Maßnahmen zur schwingungsfesten Verankerung der elektronischen Bauelemente auf den Schaltungsträgern können demnach reduziert werden und unter Umständen vollständig entfallen. Durch die angegebene Ausbildung der Dämpfungsplatte ist eine besonders hohe Wirksamkeit bei gleichzeitig preisgünstiger Herstellung und einfacher Handhabung gegeben.

Weitere Vorteile oder vorteilhafte Weiterbildungen der Erfindung ergeben sich aus den Unteransprüchen und der Beschreibung. Durch die Übereinanderanordnung der Befestigungsvorrichtungen an den Befestigungsflanschen gemäß Patentanspruch 3 ist zudem auch bei bestehenden elektromagnetisch betätigbaren Proportionalventilen ein Nachrüsten einer Dämpfungsplatte möglich. Zudem benötigt die Dämpfungsplatte nur ein Miniumum an Bauraum zu ihrer Verankerung.

### Zeichnung

Ausführungsbeispiele der Erfindung sind in der Zeichnung dargestellt und in der nachfolgenden Beschreibung näher erläutert.
- Figur 1: zeigt ein erfindungsgemäß ausgebildetes elektromagnetisch vorsteuerbares Proportionalventil in perspektivischer Darstellung, in
- Figur 2: ist eine Dämpfungsplatte als Einzelteil in verschiedenen Ansichten dargestellt.
- Figur 3,: Ein zweites Ausführungsbeispiel für eine Dämpfungsplatte zeigt ebenfalls in verschiedenen Ansichten.

### Beschreibung der Ausführungsbeispiele

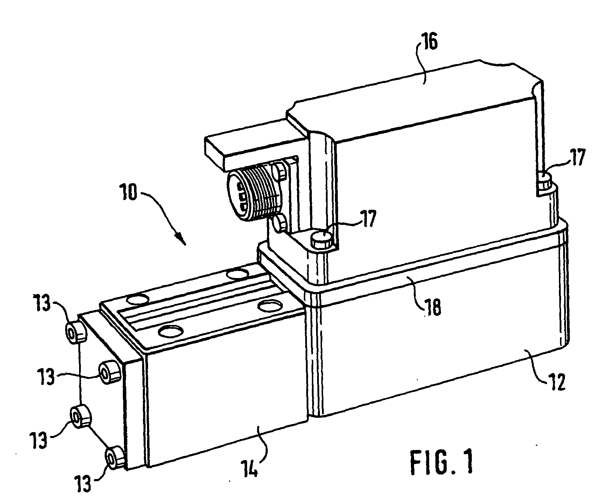

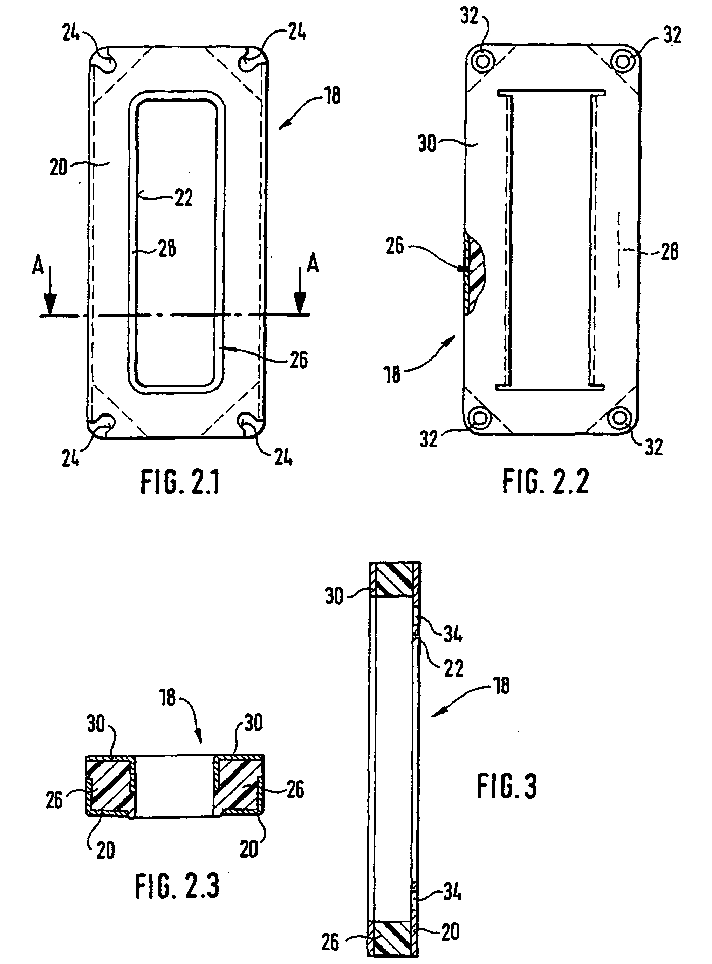

Das elektromagnetisch betätigbare Proportionalventil 10 nach Figur 1 bildet eine Baueinheit aus einem Stellmagneten 12, einem mit Hilfe von Zugankern 13 daran angebauten Ventilteil 14 und einer Steuerelektronik 16. Letztere ist über Schrauben 17 an einer Seitenfläche des Stellmagneten 12 verankert. Zwischen beiden Bauteilen ist eine Dämpfungsplatte 18 vorgesehen, die den Stellmagneten 12 schwingungstechnisch von der Steuerelektronik 16 abkoppelt.
Der Aufbau der Dämpfungsplatte 18 ist anhand von zwei Ausführungsbeispielen in den Figuren 2 und 3 in verschiedenen Ansichten dargestellt.

Figur 2.1 zeigt die Dämpfungsplatte 18 von unten, d.h. von ihrer dem Stellmagneten 12 zugewandten Seite. Es ist ein erster Befestigungsflansch 20 zu erkennen, der zur Ausbildung eines Rahmenteils mit einem zentrisch angeordneten Durchbruch 22 versehen ist. Der Befestigungsflansch 20 ist vorzugsweise aus Metall hergestellt und hat im wesentlichen eine rechteckige Außenform. Im Bereich der Ecken dieser Außenform sind nach außen offene Nuten 24 angebracht, die entlang der Diagonalen des Befestigungsflansches 20 verlaufen und die abgerundete Enden haben. Die Breite der Nut 24 ist auf den Durchmesser des Schaftes von Befestigungsschrauben abgestimmt, die zur Verankerung der Dämpfungsplatte 18 am Stellmagneten 12 (Figur 1) von außen in die Nuten 24 einzuführen sind. Die Randbereiche um die Nuten 24 dienen dabei den Schraubenköpfen als Auflage.

In gestrichelter Darstellung, da in dieser Ansicht nur mittelbar zu erkennen, ist in Figur 1 die Außenkontur eines Elastomerteils 26 angedeutet, das auf der von der Zeichenebene abgewandten Seite an den Befestigungsflansch 20 anvulkanisiert ist. Dieses Elastomerteil 26 ragt abschnittsweise in den Durchbruch 22 hinein und bildet einen gegenüber dem Befestigungsflansch 20 vorstehenden umlaufenden Bund 28, der die Trennebene zwischen dem Stellmagneten 12 und der Dämpfungsplatte 18 abdichtet. Im Bereich der Ecken ist das Elastomerteil 26 ausgespart, so daß die Nuten 24 der Dämpfungsplatte 18 freiliegen.

Die in der Figur 2.2 dargestellte Draufsicht auf die Dämpfungsplatte 18 zeigt einen zweiten Befestigungsflansch 30, der unter Zwischenlage des Elastomerteils 26 dem ersten Befestigungsflansch 20 gegenüberliegt und ebenfalls an das Elastomerteil 26 anvulkanisiert ist. Über diese Verbindung sind die beiden Befestigungsflansche 20 und 30 relativ zueinander beweglich, so daß Schwingungen, die vom ersten Befestigungsflansch 20 in das System eingeleitet werden, allenfalls stark gedämpft auf den zweiten Befestigungsflansch 30 übertragen werden. Die Außenkonturen beider Befestigungsflansche 20, 30 sind deckungsgleich, wobei im Bereich der Ecken des zweiten Befestigungsflansches 30 Gewindehülsen 32 angeordnet sind. Diese sind konzentrisch zu den gerundeten Enden der Nuten 24 des ersten Befestigungsflansches 20 plaziert und sind ebenfalls im Elastomerteil 26 ausgespart. Vorteilhafterweise sind die Gewindehülsen 32 mit dem zweiten Befestigungsflansch 30 verstemmt. Sie liegen stumpf am zweiten Befestigungsflansch 30 an und erstrecken sich in Richtung des ersten Befestigungsflansches 20, ohne diesen zu berühren. Damit ist die Relativbeweglichkeit der Befestigungsflansche 20, 30 sichergestellt. Zwischen dem Ende der Gewindehülse 32 und dem ersten Befestigungsflansch 20 verbleibt dabei ein Abstand, der größer ist als die Höhe des Schraubenkopfes einer von der Nut 24 des ersten Befestigungsflansches 20 aufgenommenen Schraube.

Der zweite Befestigungsflansch 30 ist der Steuerelektronik 16 zugewandt, die mit Hilfe von in die Gewindehülsen 32 eingeschraubten Schrauben an der Dämpfungsplatte 18 verankert ist. Bevor dieser Anschraubvorgang stattfindet, sind die von den Nuten 24 des ersten Befestigungsflansches 20 aufgenommenen Schrauben mittels eines nicht dargestellten Werkzeugs in die dafür vorgesehenen Schraubgewinde des Stellmagneten 12 einzudrehen. Hierfür kann vorteilhafter Weise ein Werkzeug verwendet werden, das durch das Kernloch der Gewindehülsen 32 des zweiten Befestigungsflansches 30 hindurchgeführt werden kann.

Durch die konzentrische Anordnung der Nuten 24 zu den Gewindehülsen 32 in Verbindung mit einem durch die Öffnung der Gewindehülsen 32 erfolgenden Anschraubvorgang wird eine besonders bauraumsparende Ausbildung der Dämpfungsplatte 18 erreicht. Zudem wird dadurch ein Nachrüsten einer solchen Dämpfungsplatte 18 an bestehende elektromagnetisch betätigbare Proportionalventile 10 ermöglicht.

Aus dem in Figur 2.3 dargestellten und entlang der Schnittlinie A-A nach Figur 1 geführten Querschnitt durch die Dämpfungsplatte 18 ist zu ersehen, daß die Befestigungsflansche 20 und 30 aus Winkelprofilen hergestellt sind. Diese Winkelprofile liegen einander punktsymmetrisch gegenüber und legen mit ihren Schenkeln zumindest abschnittsweise die Innen- und Außenkonturen der Dämpfungsplatte 18 fest. Der Zwischenraum zwischen den beiden Winkelprofilen ist vom Elastomerteil 26 ausgefüllt, so daß die Dämpfungsplatte 18 insgesamt einen massiven rechteckigen Querschnitt aufweist. Selbstveständlich sind die Befestigungsflansche 20, 30 nicht auf die gezeichneten, gleichschenkligen Winkelprofile eingeschränkt.
Erforderlichenfalls können im Elastomerteil 26 zudem Hohlräume vorgesehen sein, über deren Gestaltung und Anordnung die Elastizität des Elastomerteils 26 anwendungsspezifisch beeinflußt werden kann.

Darüberhinaus können die Befestigungsflansche 20, 30 anstatt aus Winkelprofilen auch aus Flachbandmaterial hergestellt sein. Eine derartige Ausführungsvariante zeigt Figur 3. Diese zweite Ausführungsform unterscheidet sich von der erläuterten ersten Ausführungsform desweiteren dadurch, daß an Stelle der Nuten 24 im ersten Befestigungsflansch 20 Durchgangsöffnungen 34 an der dem Stellmagneten 12 zugewandten Seite vorgesehen sind. Diese Durchgangsöffnungen 34 sind innerhalb des vom Elastomerteil 26 umschlossenen Bereichs am ersten Befestigungsflansch 20 ausgebildet, der dazu einen entsprechend kleiner als im ersten Ausführungsbeispiel dimensionierten Durchbruch 22 aufweist. Zur Verankerung der Steuerelektronik 16 an der Dämpfungsplatte 18 sind am zweiten Befestigungsflansch 30 ebenfalls Gewindehülsen 32 in den Eckbereichen vorhanden, die jedoch in Figur 3 nicht zu erkennen sind.

Selbstverständlich sind weitergehende Änderungen oder Ergänzungen an den beschriebenen Ausführungsbeispielen möglich, ohne vom Grundgedanken der Erfindung abzuweichen.

## Patentansprüche

1. Elektromagnetisch betätigbares Proportionalventil (10) mit einem Stellmagneten (12) mit einer Spule und mit einem Anker, mit einem mit dem Stellmagneten zusammengebauten Ventilteil (14), in dem ein vom Anker beaufschlagtes Stellglied Druckmittelverbindungen zwischen Druckmittelkanälen steuert, und mit einer an den Stellmagneten (12) oder an das Ventilteil (14) angeflanschten und die elektrische Ansteuerung der Spule regelnden Steuerelektronik (16), **dadurch gekennzeichnet, daß** zwischen der Steuerelektronik (16) und dem Stellmagneten (12) und/oder dem Ventilteil (14) eine Dämpfungsplatte (18) aus zwei einander gegenüberliegenden Befestigungsflanschen (20, 30) und einem dazwischen angeordneten und an den Befestigungsflanschen (20, 30) verankerten Elastomerteil (26) vorgesehen ist.

2. Elektromagnetisch betätigbares Proportionalventil nach Anspruch 1, **dadurch gekennzeichnet, daß** die Befestigungsflansche (20, 30) aus Metall gefertigt sind und daß das Elastomerteil (26) an diese Befestigungsflansche (20, 30) anvulkanisiert ist.

3. Elektromagnetisch betätigbares Proportionalventil nach Anspruch 1 oder 2, **dadurch gekennzeichnet, daß** die beiden Befestigungsflansche (20, 30) aus zwei punktsymmetrisch zueinander angeordneten und die Kontur der Dämpfungsplatte (18) bestimmenden Rahmenteilen aus Winkelprofil gebildet sind.

4. Elektromagnetisch betätigbares Proportionalventil nach einem der Ansprüche 1 bis 3, **dadurch gekennzeichnet, daß** die Befestigungsflansche (20, 30) im wesentlichen rechteckige Außenform haben und im Bereich ihrer Ecken mit Befestigungsvorrichtungen (24, 32) versehen sind und daß das Elastomerteil (26) im Bereich dieser Ecken ausgespart ist.

5. Elektromagnetisch betätigbares Proportionalventil nach Anspruch 4, **dadurch gekennzeichnet, daß** die der Steuerelektronik (16) zugewandten Befestigungsvorrichtungen Gewindehülsen (32) sind, in die Schrauben zur Befestigung der Dämpfungsplatte (18) an der Steuerelektronik (16) einschraubbar sind und daß die dem Stellmagnet (12) oder dem Ventilteil (14) zugewandten Befestigungsvorrichtungen diagonal verlaufende und zum Umfang hin offene Nuten (24) sind, in die Schrauben zur Verankerung der Dämpfungsplatte (18) am Stellmagnet (12) oder am Ventilteil (14) radial von außen einführbar sind.

6. Elektromagnetisch betätigbares Proportionalventil nach Anspruch 5, **dadurch gekennzeichnet, daß** die Breite der Nut (24) auf den Schaftdurchmesser der einzuführenden Schrauben abgestimmt ist, daß das Ende der Nut (24) abgerundet ist und daß die Tiefe der Nut (24) derart bemessen ist, daß die Schraubenköpfe in ihrer Endlage im wesentlichen konzentrisch zu den gegenüberliegenden Gewindehülsen (32) positioniert sind, ohne diese zu berühren.

7. Elektromagnetisch betätigbares Proportionalventil nach Anspruch 5, **dadurch gekennzeichnet, daß** zur Betätigung der Schrauben zur Verankerung des ersten Befestigungsflansches (20) am Stellmagnet (12) oder am Ventilteil (14) ein durch das Kernloch der Gewindehülsen (32) des zweiten Befestigungsflanschs (30) hindurchführbares Werkzeug vorgesehen ist.

8. Elektromagnetisch betätigbares Proportionalventil nach einem der Ansprüche 1 bis 7, **dadurch gekennzeichnet, daß** es hydraulisches Druckmittel steuert.

## Claims

1. Proportional valve (10) that can be actuated electromagnetically, with an actuating solenoid (12) with a coil and with an armature, with a valve part (14) which is assembled with the actuating solenoid and in which a final control element acted on by the armature controls pressure medium connections between pressure medium channels, and with control electronics (16) flange-mounted on the actuating solenoid (12) or on the valve part (14) and controlling the electrical activation of the coil, **characterized in that**, between the control electronics (16) and the actuating solenoid (12) and/or the valve part (14), a damping plate (18) is provided, comprising two fastening flanges (20, 30) lying opposite each other and an elastomer part (26) arranged in between and anchored on the fastening flanges (20, 30).

2. Proportional valve that can be actuated electromagnetically according to Claim 1, **characterized in that** the fastening flanges (20, 30) are produced from metal and **in that** the elastomer part (26) is vulcanized onto these fastening flanges (20, 30).

3. Proportional valve that can be actuated electromagnetically according to Claim 1 or 2, **characterized in that** the two fastening flanges (20, 30) are formed by two frame parts comprising angle sections arranged point-symmetrically in relation to each other and defining the contour of the damping plate (18).

4. Proportional valve that can be actuated electromagnetically according to one of Claims 1 to 3, **characterized in that** the fastening flanges (20, 30) have an essentially rectangular external form and are provided with fastening devices (24, 32) in the region of their corners and **in that** the elastomer part (26) is recessed in the vicinity of these corners.

5. Proportional valve that can be actuated electromagnetically according to Claim 4, **characterized in that** the fastening devices facing the control electronics (16) are threaded sleeves (32), into which screws can be inserted for fastening the damping plate (18) to the control electronics (16) and **in that** the fastening devices facing the actuating solenoid (12) or the valve part (14) are grooves (24) extending diagonally and open towards the circumference, into which screws can be inserted radially from the outside for anchoring the damping plate (18) on the actuating solenoid (12) or on the valve part (14).

6. Proportional valve that can be actuated electromagnetically according to Claim 5, **characterized in that** the width of the groove (24) is made to match the shaft diameter of the screws to be inserted, **in that** the end of the groove (24) is rounded and **in that** the depth of the groove (24) is dimensioned in such a way that, in their end position, the screw heads are positioned essentially concentrically in relation to the opposing threaded sleeves (32), without touching them.

7. Proportional valve that can be actuated electromagnetically according to Claim 5, **characterized in that**, to actuate the screws for anchoring the first fastening flange (20) on the actuating solenoid (12) or on the valve part (14), a tool which can be inserted through the core hole of the threaded sleeves (32) of the second fastening flange (30) is provided.

8. Proportional valve that can be actuated electromagnetically according to one of Claims 1 to 7, **characterized in that** it controls hydraulic pressure medium.

## Revendications

1. Soupape proportionnelle à actionnement électromagnétique (10) qui comprend un électro-aimant de commande (12) qui comprend une bobine et un induit, une partie soupape (14) assemblée à l'électro-aimant de commande, dans laquelle un élément de commande sollicité par l'induit commande les communications de fluide sous pression entre des canaux de fluide sous pression, et une électronique de commande (16) fixée par bride à l'électro-aimant de commande (12) ou à la partie soupape (14), et qui règle l'excitation électrique de la bobine,
**caractérisée en ce que**
entre l'électronique de commande (16) et l'électro-aimant de commande (12) et/ou la partie soupape (14), est prévue une plaque amortissante (18) composée de deux brides de fixation (20, 30) mutuellement opposées et d'une partie en élastomère (26) disposée entre ces dernières et ancrée aux brides de fixation (20, 30).

2. Soupape proportionnelle à actionnement électromagnétique selon la revendication 1,
**caractérisée en ce que**
les brides de fixation (20, 30) sont fabriquées en métal et la partie en élastomère (26) est vulcanisée contre ces brides de fixation (20, 30).

3. Soupape proportionnelle à actionnement électromagnétique selon la revendication 1 ou 2,
**caractérisée en ce que**
les deux brides de fixation (20, 30) sont formées de deux parties formant cadre en cornières disposées symétriquement par rapport à un point et qui définissent le contour de la plaque amortissante (18).

4. Soupape proportionnelle à actionnement électromagnétique selon l'une des revendications 1 à 3,
**caractérisée en ce que**
les brides de fixation ont une forme extérieure sensiblement rectangulaire et sont munies de dispositifs de fixation (24, 32) dans les angles où la partie en élastomère (26) est évidée.

5. Soupape proportionnelle à actionnement électromagnétique selon la revendication 4,
**caractérisée en ce que**
les dispositifs de fixation dirigés vers l'électronique de commande (16) sont des douilles filetées (32) dans lesquelles des vis peuvent fixer la plaque amortissante (18) à l'électronique de commande (16) et les dispositifs de fixation dirigés vers l'électro-aimant de commande (12) ou vers la partie soupape (14) sont des encoches (24) s'étendant en diagonale, ouvertes vers la périphérie, et dans lesquelles des vis destinées à ancrer la plaque amortissante (18) à l'électro-aimant de commande (12) ou à la partie soupape (14) peuvent être engagées de l'extérieur dans une direction radiale.

6. Soupape proportionnelle à actionnement électromagnétique selon la revendication 5,
**caractérisée en ce que**
la largeur de l'encoche (24) est accordée au diamètre de la tige des vis qu'il s'agit d'introduire, l'extrémité de l'encoche (24) est arrondie et la profondeur de l'encoche (24) est calculée de manière que les têtes de vis, une fois dans leur position finale soient positionnées de façon sensiblement concentrique aux douilles filetées opposées (32) sans toucher ces dernières.

7. Soupape proportionnelle à actionnement électromagnétique selon la revendication 5,
**caractérisée en ce que**
pour actionner les vis servant à ancrer la première bride de fixation (20) à l'électro-aimant de commande (12) ou à la partie soupape (14), il est prévu un outil qui peut être enfilé à travers le trou de noyau des douilles filetées (32) de la seconde bride de fixation (30).

8. Soupape proportionnelle à actionnement électromagnétique selon l'une des revendications 1 à 7,
**caractérisée en ce qu'**
elle commande un fluide hydraulique sous pression.
